(19) Europäisches Patentamt
European Patent Office
Office européen des brevets

(11) Veröffentlichungsnummer: **0 430 002 A2**

# (12) EUROPÄISCHE PATENTANMELDUNG

(21) Anmeldenummer: **90122000.4**

(51) Int. Cl.[5]: **C08J 7/04**

(22) Anmeldetag: **17.11.90**

(30) Priorität: **01.12.89 DE 3939760**

(43) Veröffentlichungstag der Anmeldung: **05.06.91 Patentblatt 91/23**

(84) Benannte Vertragsstaaten: **AT DE ES FR GB IT NL SE Patentblatt**

(71) Anmelder: **BAYER AG**

**W-5090 Leverkusen 1 Bayerwerk(DE)**

(72) Erfinder: **Henning, Wolfgang, Dr.**
**Zur Linde 27**
**W-5067 Kürten(DE)**
Erfinder: **Sirinyan, Kirkor, Dr.**
**Humperdinck Strasse 12**
**W-5060 Bergisch Gladbach 2(DE)**
Erfinder: **Benda, Bruce**
**Birkerfeld 16**
**W-5060 Bergisch Gladbach 1(DE)**

## (54) Verfahren zur Lackierung von Kunststoffen, lackierte Kunststoffe und die Verwendung von hierzu geeigneten Haftvermittlern.

(57) Ein Verfahren zur Lackierung von Kunststoffen unter Verwendung eines Beschichtungsmittels, welches als Haftvermittler ein chemisch modifiziertes, amorphes Polyolefin mit einer mittleren Molmasse von 10 000 bis 100000 g/mol in Kombination mit 2,5 bis 35 Gew.-%, bezogen auf das Gewicht des modifizierten Polyolefins eines Bisphenol-Derivats enthält, die so erhaltenen lackierten Kunststoffe und die Verwendung von Kombinationen aus chemisch modifizierten, amorphen Polyolefinen der genannten Art mit bestimmten Bisphenol-Derivaten als die Haftvermittlung verbessernde Zusatzmittel in Kunststofflacken.

EP 0 430 002 A2

# VERFAHREN ZUR LACKIERUNG VON KUNSTSTOFFEN, LACKIERTEN KUNSTSTOFFEN UND DIE VERWENDUNG VON HIERZU GEEIGNETEN HAFTVERMITTLERN

Die Erfindung betrifft ein neues Verfahren zur Lackierung von Kunststoffen unter Verwendung eines Beschichtungsmittels, welches als Haftvermittler bestimmte, chemisch modifizierte, amorphe Polyolefine, insbesondere Polypropylene in Kombination mit bestimmten Bisphenol-Derivaten als weiterem Hilfsmittel enthalten, die so lackierten Kunststoffe und die Verwendung der genannten Hilfsmittel-Kombinationen als Haftvermittler in Kunststofflacken.

Zum Aufbringen von gut haftenden Lackauflagen auf Kunststoffen, insbesondere auf PP-(Polypropylen)-Spritzgußteilen, ist eine chemische oder physikalische Modifizierung der Substratoberflächen erforderlich. In diesem Zusammenhang seien Beflammen (vgl. beispielsweise F. Garbassi u.a., J. Mater Sci., 22, Seiten 207 bis 212 (1987)), Coronabehandeln (vgl. beispielsweise F. Lawson, Rubber Chem. and Technol., 60, 102 (1987)), Plasmabehandeln (vgl. beispielsweise L.H. Coopes et al J. Macromol. Chem., 17, Seiten 217 bis 226 (1982) und EP-A-0.282.094), Beizen mit Chromschwefelsäure (vgl. beispielsweise M. Salkauskas J. Appl. Polym. Sci., 26, Seiten 2097 bis 2098 (1981)) erwähnt. Ferner kann der Literatur entnommen werden, daß es möglich ist, durch Verwendung von Haftvermittlerauflagen auf Basis von chlorierten Polyolefinen (US-PS 3.676.391) oder MSA-modifizierten Polyolefinen (DE-OS 1.546.982) Kunststoffteile auf Basis von Polypropylen und Polyethylenen haftfest lackierbar zu machen.

Diese Methoden sind kostenintensiv und zudem bei Spritzgußteilen mit komplizierter Geometrie nicht anwendbar. Das Aufbringen von besagten Haftvermittlerauflagen ist neben den hohen Händlingskosten wegen des niedrigen Festkörpergehalts noch zusätzlich mit Umweltproblemen verbunden. Darüber hinaus ist ihre Anwendung auf bestimmte Lacksysteme beschränkt.

In der PCT-Anmeldung mit der Veröffentlichungsnummer WO 88/05346 wird vorgeschlagen, die Haftvermittlerauflagen mittels zusätzlicher Maßnahmen wie UV-Bestrahlung zu modifizieren, was auf einen zusätzlichen Aufwand hinausläuft.

Ein Beimengen von chlorierten Polyolefinen zu den Kunststofflacken, beispielsweise von herkömmlichen, chlorierten Polypropylenen, wie es in US-PS 2.468.480 empfohlen wird, ist mit dem Nachteil verbunden, daß solche chlorierten Polyolefine mit den üblichen Kunststofflacken nur schlecht verträglich sind. Ferner ist ihre Löslichkeit in üblichen Lacklösungsmitteln sehr gering, was die praktische Verarbeitbarkeit negativ beeinträchtigt.

In der eigenen älteren deutschen Patentanmeldung P 39 09 217.8 wird empfohlen, chemisch modifiziertes, amorphes Polyolefin - der auch erfindungsgemäß einzusetzenden Art - als Haftvermittler zu verwenden. Die alleinige Verwendung dieser Verbindungen als Haftvermittler ist jedoch mit dem Nachteil behaftet, daß diese Zusatzmittel nicht ausreichend sedimentstabil in die Kunststofflacke eingearbeitet werden können, so daß sie alsbald sedimentieren und damit ihre Wirksamkeit verlieren.

Es war daher die der Erfindung zugrundeliegende Aufgabe, ein neues Verfahren zur Lackierung von Kunststoffen zur Verfügung zu stellen, welches sich aufgrund der Verwendung von neuartigen Haftvermittlern zur Herstellung von hochwertigen Lacküberzügen eignet, ohne mit den Nachteilen der genannten Verfahren des Standes der Technik behaftet zu sein, wobei die Haftvermittler sedimentstabil in die Lacke eingearbeitet werden können.

Diese Aufgabe konnte durch die Bereitstellung des nachstehend näher beschriebenen erfindungsgemäßen Verfahrens bzw. die erfindungsgemäße Verwendung der nachstehend näher beschriebenen Kombination von erfindungsgemäßen Haftvermittlern mit bestimmten Bisphenol-Derivaten gelöst werden.

Gegenstand der Erfindung ist ein Verfahren zur Lackierung von Kunststoffen unter Verwendung eines Beschichtungsmittels, welches neben einem Ein- oder Zweikomponenten-Bindemittel mindestens einen Haftvermittler, sowie weitere Hilfs- und Zusatzmittel enthält, wobei der Haftvermittler ein chemisch modifiziertes, amorphes Polyolefin mit einer mittleren Molmasse von 10 000 bis 100 000 g/ Mol, einer Uneinheitlichkeit von 1,0 bis 6,5, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 2,5 bis 15,0 Gew.-% darstellt, dadurch gekennzeichnet, daß man als weiteres Hilfsmittel, gegebenenfalls neben sonstigen zusätzlich eingesetzten Hilfs- und Zusatzmitteln, Verbindungen der allgemeinen Formel

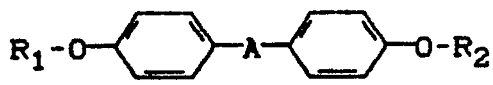

in einer Menge von 2,5 bis 35 Gew.-%, bezogen auf das Gewicht des amorphen Polyolefins mitverwendet, wobei in dieser Formel

A für einen zweiwertigen Rest der Formeln

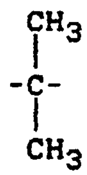 , 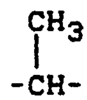 , 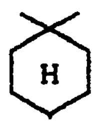 oder 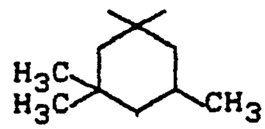

steht und

$R_1$ und $R_2$ für gleiche oder verschiedene Reste stehen und gesättigte aliphatische Kohlenwasserstoffreste mit 1 bis 8 Kohlenstoffatomen, Hydroxyalkylreste mit 2 bis 6 Kohlenstoffatomen, wobei zwischen der Hydroxylgruppe und dem Sauerstoffatom mindestens zwei Kohlenstoffatome angeordnet sind, oder einen Rest der Formel

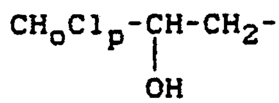

bedeuten, wobei o für 0, 1 oder 2 und p für eine ganze Zahl von 1 bis 3 stehen, mit der Maßgabe, daß die Summe o + p = 3 beträgt.

Gegenstand der Erfindung sind auch die so erhaltenen, lackierten Kunststoffe.

Gegenstand der Erfindung ist schließlich auch die Verwendung von Kombinationen aus

a) chemisch modifizierten, amorphen Polyolefinen einer mittleren Molmasse von 10 000 bis 100 000 g/Mol, einer Uneinheitlichkeit von 1,0 bis 6,5, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 2,5 bis 15 Gew.-%

und

b) 2,5 bis 35 Gew.-%, bezogen auf das Gewicht der Komponente a) an Verbindungen der Formel

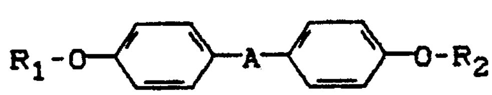

als die Haftvermittlung verbessernde Zusatzmittel in Kunststofflacken, wobei

A, $R_1$ und $R_2$ die obengenannte Bedeutung haben.

Bei den erfindungswesentlichen Haftvermittlern handelt es sich um chemisch modifizierte, gegebenenfalls chlorhaltige amorphe Polyolefine, vorzugsweise chemisch modifizierte, amorphe Polypropylene mit einer mittleren, gelpermeationschromatographisch ermittelbaren Molmasse Mw 10 000 bis 100 000, vorzugsweise 15 000 bis 60 000 und besonders bevorzugt 17 000 bis 40 000 g/Mol, mit der Uneinheitlichkeit 1,0 bis 6,5, vorzugsweise 1,5 bis 4,5, mit einem Gehalt an chemisch gebundenem Chlor von 2,5 bis 50, vorzugsweise 15 bis 40 Gew.-%, ganz besonders bevorzugt 20 bis 35 Gew.-%, und einem Gehalt an Stickstoff, Sauerstoff, Schwefel und/oder Silicium in Form von diese Elemente aufweisenden funktionellen Gruppen von insgesamt 2,5 bis 15, vorzugsweise 2,5 bis 7,5 Gew.-%. Insbesondere diese funktionellen

Gruppen sind für die ausgezeichnete Verträglichkeit der erfindungsgemäßen Additive mit den herkömmlichen Lacksystemen bzw. die gute Löslichkeit in herkömmlichen Lacklösungsmitteln verantwortlich. Außerdem wird durch diese funktionellen Gruppen eine gute physikalische Fixierung des Additivs in der Lackmatrix gewährleistet.

Gut geeignete funktionelle Gruppen sind beispielsweise Carboxyl-, Carbonsäureanhydrid-, Carbonsäureester-, Carbonsäureamid-, Carbonsäureimid-, Amino-, Aldehyd-, Keton-, Sulfonsäureester-, Hydroxy-, Hydroperoxid- oder Alkoxysilangruppen oder auch heterocyclische Gruppierungen wie Imidazol-, Carbazol- oder Pyridinylgruppen oder schließlich auch aktivierte Doppelbindungen wie Vinylsulfonyl-oder Vinylaminogruppen, sowie schließlich auch Mercaptogruppen. Ganz besonders gut geeignete funktionelle Gruppen sind Hydroxyl-, Hydroperoxy-(H-O-O-), Carboxyl-, Carbonsäureanhydrid-, Carbonsäureamid-, Carbonsäureamidimid-, Carbonsäureester-, Amino- und Alkoxysilan-, vorzugsweise Trimethoxysilangruppen.

Bezüglich der Eignung der beispielhaft genannten funktionellen Gruppen ist lediglich darauf zu verweisen, daß diese unter üblichen Lagerungsbedingungen bei Anwesenheit von Luftsauerstoff, Feuchtigkeit und erhöhten Temperaturen bis 120 °C keine Reaktionen mit sich selbst oder mit den Lackkomponenten eingehen dürfen, mit denen sie abgemischt werden.

Zur Herstellung der chemisch modifizierten Haftvermittler werden als Ausgangsmaterialien vorzugsweise amorphe Polypropylene der Molmasse 10 000 bis 120 000 g/Mol und der Uneinheitlichkeit 1,0 bis 7,5 eingesetzt. Es ist jedoch auch möglich, als "Polyolefine" entsprechende amorphe Copolymerisate des Propylen mit anderen olefinisch ungesättigten Monomeren wie beispielsweise Ethylen, Isopren, Butadien-1,2 und/oder Butadien-1,4 oder auch entsprechende amorphe Polyethylene der genannten Molmasse- und Uneinheitlichkeits-Bereiche einzusetzen, wobei bei der Herstellung der genannten Copolymerisate des Propylens die Comonomeren in Mengen von bis zu 25 Gew.-%, bezogen auf das Gewicht aller Monomeren zum Einsatz gelangen können.

Die Einführung von Chlor erfolgt in an sich bekannter Weise durch Chlorierung der als Ausgangsmaterial dienenden amorphen Polyolefine (vgl. hierzu Houben-Weyl, Methoden der organischen Chemie, Band V/3, Seiten 511-551, Georg Thieme Verlag, Stuttgart (1962)). Zur Herstellung der erfindungsgemäßen Additive wird die Chlorierung bei Temperaturen von ca. -10 °C bis zum jeweiligen Siedepunkt des eingesetzten Lösungsmittels vorgenommen.

Der Einbau der funktionellen Gruppen kann durch Umsetzung mit herkömmlichen Peroxiden (Einbau von Hydroperoxid-oder Carboxylgruppen) bzw. durch radikalisch initiierte Pfropfreaktion mit Monomeren, die erfindungsgemäße funktionelle Gruppen aufweisen, vorgenommen werden. Als Initiator für diese pfropfreaktion können Peroxide oder Azoverbindungen der hierfür an sich bekannten Art verwendet werden. Die Modifizierungsreaktionen sind an sich bekannt und werden beispielsweise in folgenden Literaturstellen beschrieben: G.A. Russel, J. Am. Chem. Soc., 79, 3871 (1957), M. Iring et al., Polymer Degradation and Stability, 5, 467 (1983), N.G. Gaylord, Journal of Polymer Science, Polymer Letters Edition, Vol. 21, 23-30 (1983), A. Neyishi et al, J. of Appl. Poly. Sci. 22, 2953 (1978), A. Hoff, J. of Appl. Poly. Sci., 29, 465 (1984).

Geeignete Initiatoren sind beispielsweise Kaliumperoxodisulfat, Azo-bisisobutyronitril, t-Butylperbenzoat, t-Amyl-perneodecanoat, p-Benzodinen, t-Butyl-perisononanoat, Di-2-ethylhexyl-peroxydicarbonat oder Di-n-butyl-peroxydicarbonat.

Geeignete Monomere mit funktionellen Gruppen wären beispielsweise Allylamin, Allylalkohol, Trimethoxyvinylsilan, Triethoxyvinylsilan, Ethylallylether, Cyclohexen-1-dicarbonsäureanhydrid-4, Maleinsäureanhydrid, Maleinsäuredimethyl-, -diethyl-, -dipropyl- und -dibutylester bzw. deren Säureamide wie Maleinsäurediethylamid usw., n-Alkyl-Maleinsäureimide beispielsweise n-Propyl-Maleinsäureimid oder n-Butyl-Maleinsäureimid, Fumarsäure, Fumarsäuredimethyl-, -diethyl-, -dipropyl- bzw. -dibutylester bzw. deren Säureimide oder -amide, 3-Tri-methoxysilyl-1-Chlorpropan, N[2(Trimethoxysilyl)ethyl]ethylendiamin, 3-Trimethoxysilyl-1-chlorpropan, Mercaptoethyl-, Mercaptopropyl-, Mercaptobutyltrimethoxy- bzw. -triethoxysilan, ferner Vinylencarbonat, Vinylsulfon, 3-Trimethoxysilyl-propyl-1-imidazol bzw. -carbazol. Die geeigneten Monomeren sind im allgemeinen solche, die mit den Polyolefinen nicht zu Blockcopolymerisaten reagieren.

Der Einbau von funktionellen Gruppen kann sowohl in der Schmelze mittels Extrudern oder anderen üblichen Spritzgußtechniken bei Temperaturen von ca. 140 °C bis 300 °C, vorzugsweise jedoch bei Temperaturen oberhalb des Schmelzbereichs der jeweils eingesetzten Polyolefine (vgl. hierzu G.M. Gale, Applied Organometallic Chemistry, 2` Seiten 17-31 (1988)) oder in einem geeigneten Lösungsmittel (vgl. hierzu DE-OS 1 546 982) vorgenommen werden. Zum Einbau von funktionellen Gruppen in Lösung wird die Pfropfreaktion im allgemeinen bei erhöhten Temperaturen von ca. 40 °C bis zum jeweiligen Siedepunkt des Lösungsmittels vorgenommen. Geeignete Lösungsmittel sind beispielsweise Xylol, Tetrachlorkohlenstoff, Toluol, Chlorbenzol, Tetralin, Kresol oder Gemische derartiger Lösungsmittel.

Die Reihenfolge der Reaktionen (Chlorierung bzw. Einbau der funktionellen Gruppen) ist unwesentlich.

Bei der Durchführung des erfindungsgemäßen Verfahrens kommen neben den genannten, erfindungswesentlichen Haftvermittlern als weitere erfindungswesentliche Hilfsmittel bestimmte Bisphenol-Derivate zum Einsatz. Es handelt sich hierbei um Verbindungen der allgemeinen Formel

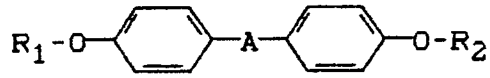

für welche A, $R_1$ und $R_2$ die bereits obengenannte Bedeutung haben.

Bevorzugt einzusetzende derartige Bisphenol-Derivate sind solche, für welche A die bereits genannte Bedeutung hat und $R_1$ und $R_2$ für gleiche oder verschiedene Reste stehen und der Formel

$$HO(-CH_2)_n-$$

entsprechen, wobei n für eine ganze Zahl von 2 bis 6 steht.

Besonders bevorzugt sind solche Bisphenol-Derivate der genannten allgemeinen Formel, für welche A die bereits genannte Bedeutung hat und $R_1$ und $R_2$ für gleiche oder verschiedene Reste stehen und der Formel

$$CH_oCl_p-\underset{\displaystyle OH}{\underset{|}{CH}}-CH_2-$$

entsprechen, wobei o und p die bereits obengenannte Bedeutung haben.

Die Herstellung der Bisphenol-Derivate erfolgt nach an sich bekannten Verfahren. Die Bisphenole selbst können durch eine altbekannte Kondensationsreaktion aus Phenol und den entsprechenden Ketonen bzw. dem entsprechenden Aldehyd, beispielsweise Aceton, Acetaldehyd, Cyclohexanon oder Isophoron erhalten werden, während der Einbau der Reste $R_1$ und $R_2$ durch an sich bekannte Substitutionsreaktionen an den beiden Sauerstoffatomen der Bisphenole anschließt- Die Herstellung der besonders bevorzugten Bisphenol-Derivate mit Substituenten $R_1$ und $R_2$ der Formel

$$CH_oCl_p-\underset{\displaystyle OH}{\underset{|}{CH}}-CH_2-$$

kann beispielsweise durch Umsetzung der jeweiligen Bisphenole mit Epichlorhydrin zum entsprechenden Bis-epoxid und anschließende Öffnung des Oxiranringes mit HCl erfolgen. Auf diese Weise sind Verbindungen mit $o = 2$ und $p = 1$ zugänglich. Die Herstellung der entsprechenden, höherchlorierten Bisphenol-Derivate kann beispielsweise durch Umsetzung von 3,3-Dichlorpropan-1,2-epoxid bzw. 3,3,3-Trichlorpropan-1,2-epoxid mit den besagten Bisphenolen in alkalischen Medien und anschließende Öffnung des Oxiranrings mit HCl vorgenommen werden. Die genannten, chlorierten Epoxide sind leicht zugängliche Verbindungen und können beispielsweise aus 3,3-Dichlorpropen-1 bzw. 3,3,3-Trichlorpropen-1 mittels Peroxobenzoesäure hergestellt werden (vgl. beispielsweise H. Lee und K. Neville, Handbook of Epoxy Resins Chapter 3, 5. 6-8, Mc Graw-Hill Book Company New York (1967)).

Bei der Durchführung des erfindungsgemäßen Verfahrens werden die Bisphenol-Derivate in Mengen von 2,5 bis 35 Gew.-%, vorzugsweise 2,5 bis 25 Gew.-%, bezogen auf das Gewicht des erfindungsgemäß als Haftvermittler verwendeten chemisch modifizierten, amorphen Polyolefins verwendete Diese erfindungsgemäß zu verwendenden Kombinationen aus a) chemisch modifiziertem, amorphem Polyolefin und b) Bisphenol-Derivat werden vorzugsweise lösungsmittelhaltigen Kunststofflacken als haftvermittelnde Zusätze einverleibt, wobei die Komponente a) das eigentliche haftvermittelnde Zusatzmittel darstellt und die Komponente b) als Verträglichkeitsmacher für die Komponente a) wirkt.

Die erfindungsgemäß zu verwendenden Kombinationen aus den Einzelkomponenten a) und b) werden in den Kunststofflacken im übrigen in solche Mengen eingesetzt, die einer Menge der genannten Komponente a) von 0,1 bis 15 Gew.-%, vorzugsweise 1 bis 10 Gew.-% und besonders bevorzugt 2 bis 5 Gew.-%, bezogen auf das Gewicht der lösungsmittelfreien Bindemittel, entspricht.

Bei den zur Kunststofflackierung eingesetzten Beschichtungsmitteln handelt es sich beispielsweise um solche, die als Bindemittel Ein- oder Zweikomponenten-Polyurethansysteme, Alkydharze, Melaminharze, gesättigte oder ungesättigte Polyesterharze, hlkydharze, Nitrocellulose, Kautschuktypen oder Polyamidharze enthalten. Vorzugsweise handelt es sich bei diesen Beschichtungsmitteln um lösungsmittelhaltige Lacke, die die üblichen Lacklösungsmittel wie beispielsweise Butylacetat, Methylethylketon, Methylisobutylketon, Methoxypropylacetat, Toluol, Xylol oder beliebige Gemische derartiger Lösungsmittel enthalten. Grundsätzlich geeignet ist jedoch auch die Verwendung von lösungsmittelarmen oder lösungsmittelfreien bzw. von wäßrigen Beschichtungsmitteln, in denen die erfindungswesentlichen Haftvermittler in den oben angegebenen Mengen vorliegen. Geeignete Beschichtungsmittel sind beispielsweise in H. Kittel, Lehrbuch der Lacke und Beschichtungen, Band IV, Seiten 76 bis 306, Verlag W.A. Colomb (1986) oder in dem gleichen Lehrbuch, Ausgabe 1976, Band IV, Seiten 328 bis 358 beschrieben.

Besonders bevorzugt handelt es sich bei den Beschichtungsmitteln um Ein- und insbesondere Zweikomponenten-Polyurethansysteme der an sich bekannten Art.

Geeignete Einkomponenten-Polyurethanlacke sind beispielsweise solche auf Basis von überwiegend linearen, voll ausreagierten Polyurethanen, die in organischen Lacklösungsmitteln der beispielhaft genannten Art löslich sind und keine reaktive Zentren mehr aufweisen, d.h. die physikalisch trocknen (siehe z.B. Kunststoff-Handbuch, Band 7 "Polyurethane", herausgegeben von Günter Oertel, Carl Hanser Verlag München/Wien (1983), Seite 551). Geeignete physikalisch trocknende Lacke dieses Typs sind beispielsweise jene, deren Binder auf einem ausreagierten linearen Polyurethan aus (i) einem Polyesterdiol, (ii) einem Kettenverlängerungsmittel und (iii) einem Diisocyanat basieren. Geeignete Polyesterdiole (i) zur Herstellung solcher Polyurethane sind beispielsweise Adipinsäure-Alkandiol-Polyesterdiole des Molekulargewichtsbereichs 600 bis 3000. Bei den Alkandiolen handelt es sich beispielsweise um Butandiol-1,4, Hexandiol-1,6, Neopentylglykol oder Mischungen derartiger Glykole. Geeignete Kettenverlängerungsmittel (ii) sind beispielsweise Diole der zur Herstellung der Polyesterdiole eingesetzten Art und auch Diamine wie Hexamethylendiamin oder Isophorondiamin. Geeignete Diisocyanate (iii) sind beispielsweise 4,4'-Diisocyanatodiphenylmethan oder Isophorondiisocyanat. Die Polyurethane werden in an sich bekannter Weise durch Umsetzung der Ausgangsmaterialien hergestellt, wobei ein Äquivalentverhältnis von Isocyanatgruppen gegenüber Isocyanatgruppen reaktionsfähiger Gruppen von ca. 0,9:1 bis 1,1:1 eingehalten wird.

Bei den besonders bevorzugten Zweikomponenten-Polyurethanlacken handelt es sich um solche, deren Bindemittel ein Zweikomponenten-Polyurethansystem darstellt wie sie beispielsweise in dem zuletzt zitierten Handbuch auf Seiten 541 bis 544 beschrieben werden. Die Zweikomponenten-Bindemittel dieser Lacke bestehen im allgemeinen aus einer Polyisocyanatkomponente und einer Polyolkomponente, wobei die Mengen dieser Komponenten einem molaren NCO/OH-Verhältnis von 0,5:1 bis 2:1, vorzugsweise 0,8:1 bis 1,5:1 entsprechen. Geeignete Polyisocyanate sind die bekannten Lackpolyisocyanate, beispielsweise Biuret-, Isocyanurat- oder Urethan-modifizierte Derivate einfacher Diisocyanate wie 2,4-Diisocyanatotoluol oder seine Mischungen mit 2,6-Diisocyanatotoluol und insbesondere 1,6-Diisocyanatohexan, wobei die genannten Derivate im allgemeinen 10 bis 25 Gew.-% Isocyanatgruppen enthalten.

Geeignete Polyole sind insbesondere Polyesterpolyole, Polyetherpolyole oder Polyacrylatpolyole.

Die Polyesterpolyole haben im allgemeinen ein Molekulargewicht von 500 bis 5000 und weisen mindestens 2, vorzugsweise 2 bis 6 Hydroxylgruppen pro Molekül auf.

Die Polyetherpolyole haben im allgemeinen ein Molekulargewicht von 500 bis 5000 und weisen 2 bis 3 Hydroxylgruppen pro Molekül auf.

Die Acrylatpolyole haben ein Molekulargewicht Mn von 500 bis 5000 und enthalten im allgemeinen 1 bis 12 Gew.-% Hydroxylgruppen.

Die zur Anwendung gelangenden Beschichtungsmittel können im übrigen weitere Hilfs- und Zusatzmittel wie Katalysatoren, Pigmente, die bereits erwähnten Lösungsmittel, Verlaufhilfsmittel, Füllstoffe usw. enthalten.

Die Hilfs- und Zusatzmittel, insbesondere die erfindungsgemäßen Haftvermittler, werden im Falle der Verwendung in Zweikomponenten-Polyurethanlacken im allgemeinen der Polyolkomponente zugemischt.

Die Beschichtungsmittel, die die erfindungswesentlichen Haftvermittler a) und Hilfsmittel b) enthalten, eignen sich ausgezeichnet zur Beschichtung von thermoplastischen oder duroplastischen Kunststoffen der unterschiedlichsten Art. Sie eignen sich insbesondere zur Beschichtung von oftmals nicht ohne weiteres haftfest lackierbaren Polyolefinen einer Oberflächenspannung von mindestens 35 mN/m. Solche Polyolefine sind beispielsweise modifizierte und unmodifizierte teilkristalline oder amorphe Polypropylene und Polyethylene. Besonders bevorzugte Substrate für die erfindungsgemäßen Beschichtungsmittel sind Formkörper aus Polypropylen. Daneben sind beispielhaft auch Polyvinylidenfluorid, Polytetrafluorethylen, Ethylen-Propylen-Norbordien-Kunststoffe, Acrylnitril-Butadien-Styrol-Copolymerisate, Polycarbonate, Polyamidkunststoffe, Polyester-, Polybutadien-, Polysilikone oder Zelluloseester als geeignete Substrate zu nennen. Die mit den erfindungswesentlichen Zusätzen versehenen Beschichtungsmittel werden bei der Durchführung des erfindungsgemäßen Verfahrens im allgemeinen unter Einhaltung einer Trockenfilmstärke von 0,5 bis 100, vorzugsweise 20 bis 50 µm appliziert, wobei beliebige Methoden der Kunststofflackierung zur Anwendung gelangen können. Sie zeichnen sich durch ihre hervorragende Lösemittelstabilität aus.

Im Falle einer Mehrschichtlackierung enthält selbstverständlich der Grundlack das erfindungswesentliche Additiv, während die Verwendung gleicher oder analoger Additive in den übrigen Lackschichten fakultativ ist. Hiermit kann jedoch eine verbesserte Lackzwischenhaftung erzielt werden. Auch den nicht unmittelbar mit dem zu beschichtenden Kunststoff in Berührung kommenden Lack-schichten werden in einem solchen Falle die Haftvermittler in den oben angegebenen Mengen zugesetzt.

Die erfindungsgemäß lackierten Kunststoffe können in den unterschiedlichsten Bereichen des täglichen Bedarfs zur Anwendung gelangen. Beispielhaft genannt seien der Automobilinnen-und -außenbereich, Elektro- und Elektronikgeräte, sowie Haushaltsgeräte der unterschiedlichsten Art.

Beispiel 1

100 g amorphes Polypropylen mit der mittleren Molmasse Mw 60 000 g/Mol werden in 2000 g Tetrachlorkohlenstoff gelöst, anschließend werden der Lösung 12 g Trimethoxyvinylsilan und 1 g t-Butylperbenzoat bei 70 °C im Verlaufe von einer Stunde unter $N_2$ zugetropft, die Lösung auf 10 °C abgekühlt und während eines Zeitraums von Minuten unter fortwährender UV-Bestrahlung reines Chlor eingeleitet, bis die weitere Gewichtsaufnahme 48 g beträgt. Das so modifizierte Polymere wird dann in 5000 g Ethanol ausgefällt, 5 mal mit reinem Ethanol nachgewaschen und über Nacht getrocknet. Man erhält ein Additiv mit der mittleren Molmasse von ca. 40 000 g/Mol. Es enthält 5 Gew.-%. Sauerstoff und 2,2 Gew.-% Silizium bzw. 30 Gew.-% Chlor. Es ist in Xylol, Toluol, Butylacetat usw. löslich und zeichnet sich durch ihre hervorragende Verträglichkeit in üblichen Kunststoff-Lacklösungen aus.

Eine 100 x 100 mm große, handelsübliche, modifizierte Polypropylenplatte der Fa. Hoechst AG des Typs ®Hostalen PPN 8018 wird durch Abblasen mit ionisierter Luft entladen und von Staubpartikeln befreit und dann mittels Spritzauftrag mit einem Zweikomponenten-Polyurethanlack beschichtet.

Die Komponente I des Beschichtungsmittels bestand aus einem Gemisch aus 95 Gew.-Teilen eines Hydroxylgruppen aufweisenden Polyacrylatharzes mit einem Hydroxylgruppengehalt von 2,8 Gew.-% (®Desmophen A 365 der Bayer AG, D-5090 Leverkusen),

20 Gew.-Teilen einer 25 gew.-%igen xylolischen Lösung des obengenannten Haftvermittlers,

5 Gew.-Teilen einer 25 gew.-%igen xylolischen Lösung eines Bisphenol-Derivates der Formel

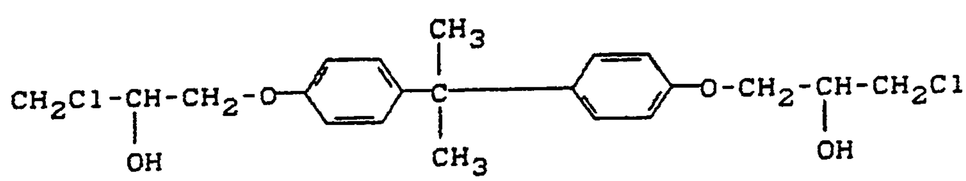

49,3 Gew.-Teilen Talkum,

3,2 GeW.-Teilen Schwarzpigment (Ruß),

65,6 Gew.-Teilen Titandioxidpigment (Rutil),

4,8 Gew.-Teilen einer 10 %igen Lösung in xylol eines handelsüblichen Schwebemittels (®Bentone der Fa. Kronos Titan GmbH, D-5090 Leverkusen) und

155 Gew.-Teilen eines Lösungsmittels, bestehend aus einem Gemisch aus Butylacetat und Xylol im Gewichtsverhältnis 1:1.

Die Komponente II des Beschichtungsmittels bestand aus einer 75 %igen Lösung in 1-Methoxypropylacetat-2/Xylol (1:1) eines Biuretpolyisocyanats auf Basis von 1,6-Diisocyanatohexan mit einem NCO-Gehalt der Lösung von 16,5 Gew.-% (®Desmodur N 75 der Bayer AG). Die Menge der Komponenten I und II entspricht einem NCO/OH-Äquivalentverhältnis von 1:1.

Nach erfolgter Applikation des Lacks wird während 10 Minuten abgelüftet und bei 70 °C getrocknet.

Es resultiert eine Beschichtung mit der Lackhaftung gemäß DIN 53 151 Gt. 0.

Vergleichsbeispiel 1

Eine Wiederholung von Beispiel 1 ohne Verwendung der erfindungswesentlichen Zusatzmittel-Kombination (modifiziertes Polypropylen und Bisphenol-Derivat) führt zu einer Lackauflage mit einem Haftwert gemäß DIN 53 151 von Gt 5. Die Lackauflage kann problemlos von der Oberfläche entfernt werden.

Beispiel 2

Eine 100 x 100 mm große rußgefüllte und glasfaserverstärkte Polypropylenplatte der Fa. Hoechst AG wird nach Beispiel 1 mit einer Lackauflage versehen.

Man bekommt eine lackierte Platte mit einer hervorragenden Lackhaftung. Die Lackauflage weist einen Haftwert nach DIN 53 151 Gt 0 auf und besteht problemlos sowohl den Kondenswasser- (DIN 50 017-KK) als auch dem Temperaturwechseltest (ASTM D 1211).

Vergleichsbeispiel 2

Beispiel 2 wird wiederholt jedoch ohne Mitverwendung der erfindungswesentlichen Kombination. Die Haftung der Lackauflage beträgt Gt 5. Der Lack kann problemlos von der Lackoberfläche entfernt werden.

Beispiel 3

100 g amorphes Polypropylen mit der mittleren Molmasse Mw 100 000 g/Mol werden in 2000 g Tetrachlorkohlenstoff gelöst. Anschließend werden der Lösung 5 g Azobisisobutyronitril in 100 ml Tetrachlorkohlenstoff bei 75° C im Verlaufe von 120 Minuten zugetropft und 3 Stunden bei 75° C gerührt.

Anschließend wird in die Lösung während eines Zeitraums von 60 Minuten unter UV-Bestrahlung bei 0° C Chlorgas eingeleitet, bis die weitere Gewichtszunahme 21,8 g beträgt. Dann wird der Tetrachlorkohlenstoff durch reines Xylol ausgetauscht. Man erhält eine klare Polymerlösung. Der Feststoffgehalt der Lösung liegt bei 25 Gew.-%. Das modifizierte Polypropylen weist einen Gehalt an Sauerstoff von 3,5 Gew.-% in Form von Hydroxyl-, Hydroperoxy-, Carboxyl- und Chlorcarbonylgruppen und außerdem 17,5 Gew.-% chemisch gebundenes Chlor auf.

Eine 100 x 100 cm große Polypropylenplatte wird mittels Druckauftrag mit einem Zweikomponenten-Polyurethanlack unter Einhaltung einer Trockenfilmstärke von 15 µm beschichtet.

Die Komponente I des Beschichtungsmittels bestand aus einer Mischung aus

97,5 Gew.-Teilen eines Polyesterpolyols mit einem Hydroxylgruppengehalt von 2,7 % (®Desmophen A 565 der Bayer AG),

10 Gew.-Teilen der in Beispiel 1 genannten Lösung des Haftvermittlers, welcher als Kombinationskomponente noch zusätzlich 7,5 Gew.-% eines in Beispiel 1 angegebenen Bisphenol-Derivates enthält,

50 Gew.-Teilen Talkum,

3,7 Gew.-Teilen Schwarzpigment,

65,6 Gew.-Teilen Titandioxidpigment (Rutil) und

4,8 Gew.-Teilen der bereits in Beispiel 1 genannten Lösung des Schwebemittels.

Die Komponente II des Beschichtungsmittels bestand aus 40 Gew.-Teilen der bereits in Beispiel 1 genannten Lösung eines Biuretpolyisocyanats. Das NCO/OH-Verhältnis liegt bei 1:1.

Nach Ablüftung und Trocknung wie in Beispiel 1 beschrieben resultiert eine Beschichtung mit der Lackhaftung Gt 0.

Aus weiteren Untersuchungen geht hervor, daß das verwendete Additiv auch bei mehrmonatiger Lagerung die Eigenschaften der Lackkomponente I nicht negativ beeinflußte. Ebenso blieb die Topfzeit der Lacklösung unverändert.

Die Komponente I zeichnet sich durch ihre hervorragende Lagerungsstabilität aus. Trotz einer Lagerung über mehrere Monate wird keine Entmischung der Lösung beobachtet.

Vergleichsbeispiel 3

Eine Wiederholung von Beispiel 3 jedoch ohne Mitverwendung der erfindungswesentlichen Kombination führt zu einer Lackhaftung von Gt 5.

Beispiel 4

100 g amorphes Polypropylen mit der mittleren Molmasse von 40 000 g/Mol wird nach G.M. Gale, Applied Organometallic Chemistry, 2, 17 (1988) mit N-[2-(Trimethoxysilyl)-ethyl]-ethylendiamin modifiziert. Anschließend wird das so modifizierte Polypropylen mit 3 g Di-2-ethylhexyl-peroxidicarbonat in 50 g $CCl_4$ bei 70 °C unter $N_2$ versetzt und dann unter UV-Bestrahlung bei 0 °C chloriert und anschließend in Ethanol ausgefällt bzw. über Nacht bei 80 °C unter Vakuum getrocknet. Man erhält ein Additiv der mittleren Molmasse von 22 000 g/Mol mit einem Gehalt an Stickstoff von 1,4 Gew.-%, an Sauerstoff von 4,5 Gew.-%, an Silizium von 1,4 Gew.-% und an Chlor von 24,8 Gew.-%. Es ist sowohl in polaren Lösemitteln wie in Butylacetat als auch in unpolaren Lösemitteln löslich und zeichnet sich durch gute Verträglichkeit und Mischbarkeit in herkömmlichen Lacken aus.

Ein Zweikomponenten-Polyurethanlack gemäß Beispiel 1, dessen Komponente I jedoch anstelle des dort verwendeten erfindungswesentlichen Kombination

28,0 Gew.-Teile einer 25 %igen xylolischen Lösung des oben beschriebenen Haftvermittlers und 6,0 Gew.-Teile einer 25 %igen xylolischen Lösung des Bisphenolderivates der Formel

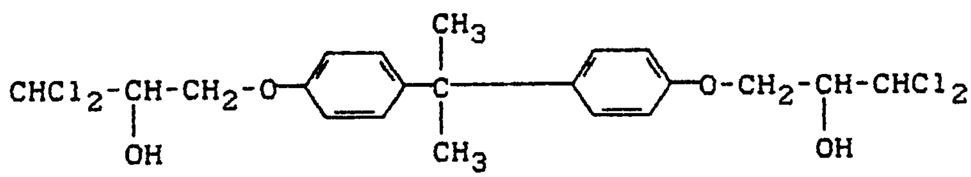

enthält, führt nach Verarbeitung gemäß Beispiel 1 unter Beschichtung einer Polypropylenplatte zu einer Beschichtung der Lackhaftung Gt 0.

Beispiel 5

50 g amorphes Polypropylen mit der mittleren Molmasse von 30 000 g/Mol werden in 1000 g Toluol gelöst, dann werden der Lösung 7,5 g Allylamin in 75 g Toluol und 1,0 g t-Amyl-perneodecanoat in 50 g Toluol im Verlauf von 2 Stunden bei 80 °C unter $N_2$ zugetropft. Anschließend wird das Lösemittel dem Polymeren unter Vakuum entzogen. Das Polymere wird in 250 g $CCl_4$ gelöct und bei 0 °C mittels UV-Bestrahlung chloriert.

Man erhält ein modifiziertes Additiv, welches 3 Gew.-% Stickstoff, 2 Gew.-% Sauerstoff und 18 Gew.-% Chlor aufweist. Es ist in gängigen Lacklösungen bzw. Lacklösemitteln gut löslich

Eine Wiederholung von Beispiel 1 jedoch unter Verwendung eines analogen Lacks, der anstelle des dort verwendeten Haftvermittlers 2 Gew.-%, bezogen auf das Gewicht des eingesetzten Polyacrylatpolyols, des obengenannten Haftvermittlers enthält, führt ebenfalls zu einer Beschichtung mit der Lackhaftung Gt 0.

Beispiel 6

Amorphes Polypropylen (250 g) mit der mittleren Molmasse von 90 000 g/Mol werden nach N.G. Gaylord, J Polym. Sci., Polym. Lett. Ed., 21, Seiten 23-30 (1983) mit Maleinsäureanhydrid modifiziert, in 5000 g $CCl_4$ gelöst und dann bei UV-Bestrahlung unter $N_2$ chloriert anschließend in Ethanol ausgefällt. Man erhält ein

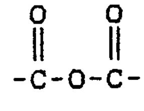

und $-CH_2-O-OH$-Gruppen aufweisendes Polypropylen mit 5,8 Gew.-% $O_2$, 10 Gew.-% $Cl_2$ und der mittleren Molmasse 40 000 g/Mol.

Eine 25 gew.-%ige Lösung des oben angegebenen Additivs in Xylol wird der Bisphenol-A-Derivat-haltigen Lacklösung gemäß Beispiel 1 anstelle der dort verwendeten xylolischen Additivlösung beigemengt. Die so erhaltene Lösung zeichnet sich durch ihre Lagerungsstabilität über mehrere Monate aus. Eine mit diesem Lack beschichtete Polypropylenplatte wiest eine Lackauflage der Haftung Gt 0 auf.

Beispiel 7

Ein Beschichtungsmittel, bestehend aus

100 Gew.-Teilen einer 55-gew.-%igen Lösung in Xylol der Viskosität 7500 mPa.s/23 °C eines handelsüblichen linearen Polyurethans (®Desmolac 4340 der Bayer AG),

17,5 Gew.-Teile der in Beispiel 6 genannten 25 %igen Additivlösung,

2,5 Gew.-Teilen der in Beispiel 1 genannten 25 %igen Lösung des Bisphenol-Derivats,

12,4 Gew.-Teilen Talkum,

38,4 Gew.-Teilen Titandioxid-Pigment (Rutil),

5,3 Gew.-Teilen des in Beispiel 1 genannten Schwebemittels und

125 Gew.-Teilen eines Lösemittels, bestehend aus Toluol, Xylol und n-Butylacetat im Gewichtsverhältnis 1:1:1

wird zum Lackieren von Polyethylen- bzw. Polypropylen-Spritzgußteilen verwendet.

Die Lackauflagen weisen jeweils einen Haftwert nach DIN 53 151 von Gt 0 auf und zeigen eine hervorragende Kondenswasser- (DIN 50 017-KK) und Temperaturwechsel-Stabilität (ASTM D 1211).

Eine Wiederholung der Versuche unter Verwendung eines Lacks, der die erfindungswesentliche Zusatzmittel-Kombination nicht enthält, führt zu Lackauflagen mit einem Haftwert von Gt 5.

## Ansprüche

1. Verfahren zur Lackierung von Kunststoffen unter Verwendung eines Beschichtungsmittels, welches neben einem Ein- oder Zweikomponenten-Bindemittel mindestens einen Haftvermittler, sowie weitere Hilfs- und Zusatzmittel enthält, wobei der Haftvermittler ein chemisch modifiziertes, amorphes Polyolefin mit einer mittleren Molmasse von 10 000 bis 100 000 g/ Mol, einer Uneinheitlichkeit von 1,0 bis 6,5, einem Chlorgehalt von 2,5 bis 50 Gew.-% und gegebenenfalls einem Gehalt an Stickstoff, Sauerstoff, Schwefel und/oder Silicium in Form von chemisch eingebauten funktionellen Gruppen von insgesamt 2,5 bis 15,0 Gew.-% darstellt, dadurch gekennzeichnet, daß man als weiteres Hilfsmittel, gegebenenfalls neben sonstigen zusätzlich eingesetzten Hilfs- und Zusatzmitteln, Verbindungen der allgemeinen Formel

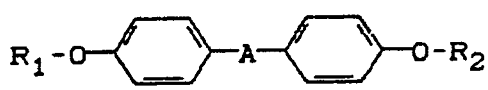

in einer Menge von 2,5 bis 35 Gew.-%, bezogen auf das Gewicht des amorphen Polyolefins mitverwendet, wobei in dieser Formel

A für einen zweiwertigen Rest der Formeln

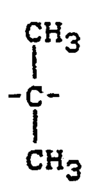 , 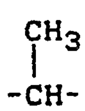 , 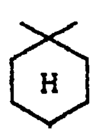 oder 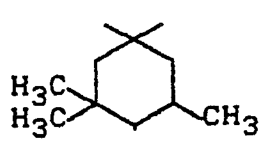

steht und

$R_1$ und $R_2$ für gleiche oder verschiedene Reste stehen und gesättigte aliphatische Kohlenwasserstoffreste mit 1 bis 8 Kohlenstoffatomen, Hydroxyalkylreste mit 2 bis 6 Kohlenstoffatomen, wobei zwischen der Hydroxylgruppe und dem Sauerstoffatom mindestens zwei Kohlenstoffatome angeordnet sind, oder einen Rest der Formel

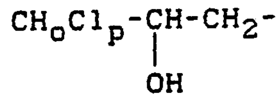

bedeuten, wobei o für 0, 1 oder 2 und p für eine ganze Zahl von 1 bis 3 stehen, mit der Maßgabe, daß die Summe o + p 3 beträgt.

2. Verfahren gemäß Anspruch 1, dadurch gekennzeichnet, daß man als chemisch modifiziertes, amorphes Polyolefin ein chemisch modifiziertes, amorphes Polypropylen verwendet.

3. Verfahren gemäß Anspruch 1 und 2, dadurch gekennzeichnet, daß man als Beschichtungsmittel ein solches verwendet, welches als Bindemittel ein Zweikomponenten-Polyurethansystem enthält.

4. Verfahren gemäß Anspruch 1 bis 3, dadurch gekennzeichnet, daß es sich bei dem zu lackierenden Substrat um amorphes oder teilkristallines, gegebenenfalls modifiziertes Polypropylen oder Polyethylen handelt.

5. Gemäß Anspruch 1 bis 4 lackierte Kunststoffe.

6. Verwendung von Kombinationen aus
   a) chemisch modifizierten, amorphen Polyolefinen einer mittleren Molmasse von 10 000 bis 100 000 g/Mol, einer Uneinheitlichkeit von 1,0 bis 6,5, einem Chlorgehalt von 2,5 bis 50 Gew.-% und einem Gehalt an Stickstoff, Sauerstoff, Schwefel und/oder Silicium in Form von chemisch eingebauten funktionellen Gruppen von insgesamt 2,5 bis 15 Gew.-%
   und
   b) 2,5 bis 25 Gew.-%, bezogen auf das Gewicht der Komponente a) an Verbindungen der Formel

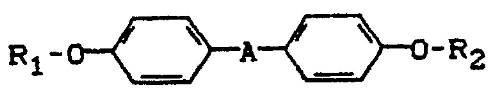

   als die Haftvermittlung verbessernde Zusatzmittel in Kunststofflacken, wobei

   A, $R_1$ und $R_2$ die in Anspruch 1 genannte Bedeutung haben.

7. Verwendung gemäß Anspruch 6, dadurch gekennzeichnet, daß es sich bei dem chemisch modifizierten, amorphen Polyolefin um ein chemisch modifiziertes, amorphes Polypropylen handelt.